# EUROPEAN PATENT APPLICATION

(11) **EP 2 696 228 A1**
(43) Date of publication of application: **12.02.2014**
(21) Application number: 12767593.2
(22) Date of filing: 06.04.2012
(51) Int. Cl.: G02B 6/38, G02B 6/40

(54) **OPTICAL CONNECTOR**

(30) Priority: 08.04.2011 JP 2011086529
(71) Applicant: Yazaki Corporation, Minato-ku Tokyo 108-8333 (JP)
(72) Inventor: HIKOSAKA Tomohiro, Susono-shi, Shizuoka (JP); IKEYA Kenichi, Susono-shi, Shizuoka (JP)
(74) Representative: Grünecker, Kinkeldey, Stockmair & Schwanhäusser
(86) International application number: PCT/JP2012/059595
(87) International publication number: WO 2012/137954

(57) **Abstract**

Disclosed is an optical connector 11, including a crimping sleeve 21 having a sandwiching flange portion 55 continued from a tubular portion 53, which is adapted to allow an optical fiber 15 to be inserted therethrough and also adapted to be inserted through a sleeve through-hole 51 formed in a rear wall of a housing 17, and facing an rear wall inner surface 59; a crimping ring 29; and a boot 23 having a locking flange portion 65 continued from a protective portion 61, which covers outer circumferences of an optical fiber cable 13 and the crimping ring 29. A boot locking protrusion 27 formed on the sandwiching flange portion 55 is inserted in a protrusion locking hole 25 formed in an inner side of the locking flange portion 65.

## Description

### Technical Field

The present invention relates to an optical connector.

### Background Art

In vehicle LAN or the like, an optical connector for connector optical fibers to each other has been known (see PTL 1). As shown in Fig. 7, such an optical connector 501 includes a stop ring 507 having a through-hole 503 formed therein so that an optical fiber 505 is disposed in the through-hole 503; a crimping ring 511 disposed around an optical fiber cable 509 for crimping the stop ring 507 and the optical fiber cable 509; a ferrule 513 disposed on a distal end of the optical fiber of the optical fiber cable 509; a spring (not shown) disposed between the ferrule 513 and the stop ring 507; a plug frame 517 fitted to the stop ring 507; a grip 519 fitted to the plug frame 517; and a boot 521 for covering portions of the crimping ring 511 and the optical fiber cable 509.

In an assembling process of the optical connector 501, the optical fiber cable 509 is extended through the boot 521, the crimping ring 511 and the stop ring in this order. For the optical cable 509, the ferrule 513 is fixed on the optical fiber 505 exposed by removing a sheath 523 or a tension-resistance body 525. In a step of crimping the crimping ring 511 against the stop ring 507 and the optical fiber cable 509, the stop ring 507 is crimped by applying a pressure from the periphery thereof using a pressing tool or the like, while the tension-resistance body 525 is sandwiched between the stop ring 507 and the crimping ring 511. Then, the grip 519 is fitted to the plug frame 517, and also the boot 521 is disposed to cover a portion of the stop ring 507, the crimping ring 511 and a portion of the optical fiber cable 509, thereby completing the optical fiber cable 509 having the optical connector.

### Citation List

### Patent Literature

PTL 1:JP-A-2010-266830

### Summary of Invention

### Technical Problem

However, according to the conventional connector 501 as described above, the boot 521 is fixed on the crimping ring 511 after crimping by press-fitting or adhesives. Therefore, in a case of fixation by press-ftting, there is a risk of separation of the boot due to inadvertent pulling of the boot or loosening of the optical fiber cable bending. Further, in a case of fixation by adhesives, there is a risk of increasing adhesion operation man-hours, material costs or the like, in addition to the same risk as those in the press-fitting fixation.

The present invention has been made keeping in mind the above problems, and an object thereof is to provide an optical connector in which separation of a boot due to inadvertent pulling of the boot or loosening of an optical fiber cable bending can be prevented without increasing operation man-hours or material costs.

### Solution to Problem

The above object of the present invention is achieved by the following configurations (1) to (3).
(1) An optical connector, including:
   a housing for receiving a ferrule connected to a distal end of an optical fiber of an optical fiber cable;
   a crimping sleeve including a tubular portion adapted to allow the optical fiber to be inserted therethrough and also adapted to be inserted through a sleeve through-hole formed in a rear wall of the housing, and a sandwiching flange portion continued from the tubular portion and facing an rear wall inner surface of the housing;
   a crimping ring for fixing a sheath of the optical fiber cable sheathed on an outer circumference of the tubular portion; and
   a boot including a protective for covering outer circumferences of the optical fiber and the crimping ring, and a locking flange portion continued from the protective portion and sandwiched between the sandwiching flange portion and the rear wall inner surface,
   wherein a boot locking protrusion formed on the sandwiching flange portion is inserted in a protrusion locking hole formed in an inner side of the locking flange portion.

   According to the optical connector of the above configuration (1), when the boot is pulled as a unity body, the locking flange portion sandwiched between the sandwiching flange portion and the rear wall inner surface is pulled toward the sleeve through-hole. When the locking flange portion is pulled toward the sleeve through-hole, the protrusion locking hole radially moving inward is locked to the boot locking protrusion, thereby preventing the locking flange portion form being pulled out from the sleeve through-hole. Also, if the optical fiber cable is pulled due to bending of the optical fiber cable or the like, the sandwiching flange portion of the crimping sleeve fixed by the crimping ring is pressed against the rear wall inner surface. The sandwiching flange portion pressed against the rear wall inner surface further surely prevents the locking flange portion from being pulled out, because the sandwiching flange portion and the rear wall inner surface sandwich the locking flange portion of the boot therebetween and also the boot locking protrusion comes into pressure contact with the rear wall inner surface.
(2) The optical connector according to the above configuration (1), wherein a pair of protrusion locking holes and a pair of boot locking protrusions are provided with the tubular portion interposed therebetween.
   According to the optical connector of the above configuration (2), the locking flange portion is locked to the boot locking protrusions on both side in a diameter direction thereof with the center of the optical fiber cable interposed therebetween, and thus is stably locked without being deformed by a strain.
(3) The optical connector according to the above configuration (1) or (2), wherein a protrusion length of the boot locking protrusion is smaller than a thickness of the locking flange portion.

According to the optical connector of the above configuration (3), when the optical fiber cable is pulled, the sandwiching flange portion of the crimping sleeve can press the locking flange portion of the boot before the boot locking protrusion is abutted to the rear wall inner surface, and as result, pulling out of the locking flange portion can be prevented by both sandwiching and locking actions.

In the foregoing, the present invention has been briefly described. Also, details of the present invention will be further apparent, when modes (hereinafter, referred to as "embodiments") for embodying the invention as described below are thoroughly read with reference to the accompanying drawings.

### Brief Description of Drawings

Fig. 1 is an exploded perspective view showing an optical connector according to an embodiment of the present invention.
Fig. 2 is a sectional view taken along a direction of an optical fiber of the optical connector according to the embodiment of the invention.
Fig. 3 is an overall perspective view showing a crimping sleeve shown in Fig. 1.
Fig. 4 is an overall perspective view showing a boot shown in Fig. 4.
Fig. 5A is a sectional view showing a main part before a tension force is exerted on the optical fiber of the optical cable shown in Fig. 2, and Fig. 5B is a sectional view showing the main part after the tension force is exerted on the optical fiber of the optical cable shown in Fig. 2
Fig. 6 is an overall view showing a variant of a protrusion engaging hole of the boot shown in Fig. 4.
Fig. 7 is a partially broken enlarged plan view showing a conventional optical connector.

### Description of Embodiments

An optical connector according to one embodiment of the present invention will be now described in detail with reference to the accompanying drawings.

The optical connector 11 according to the present embodiment is coupled to a corresponding optical connector, not shown, so that distal ends of optical fibers 15, which are core wires of optical fiber cables 13, are abutted and connected to each other. Accordingly, optical fibers, for example, for a vehicle LAN or the like are connected to each other.

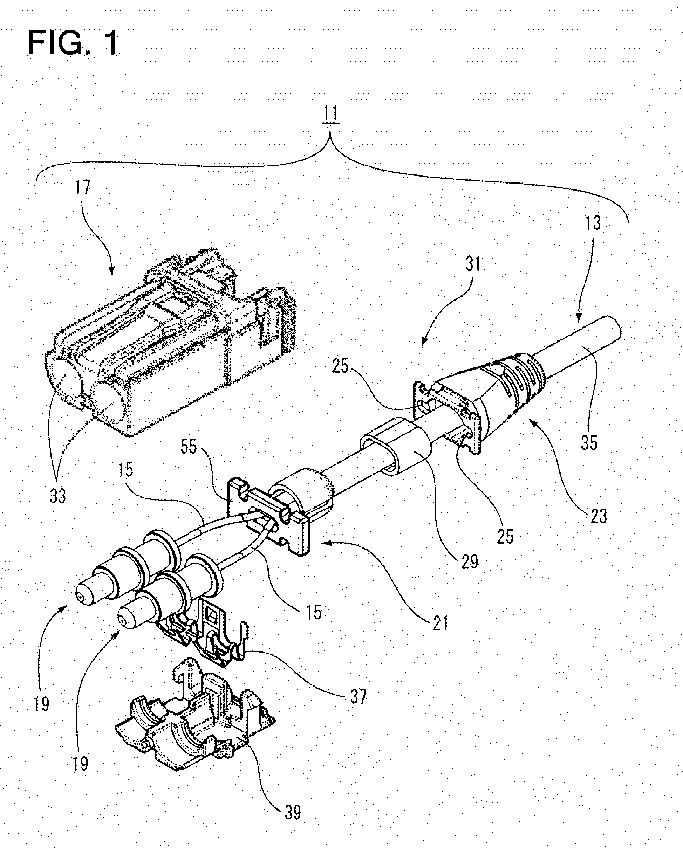

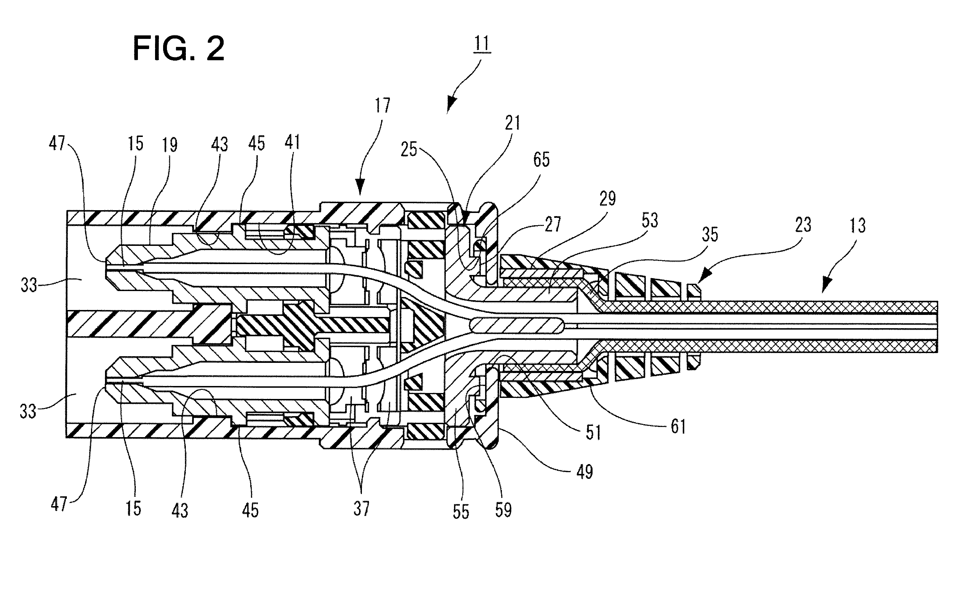

As shown in Figs. 1 and 2, the optical connector 11 according to the present embodiment includes a housing 17 for receiving a ferrule 19 connected to a distal end of the optical fiber of the optical fiber cable 13; a crimping sleeve 21 including a tubular portion 53 adapted to allow the optical fiber 15 to be inserted therethrough and also adapted to be inserted through a sleeve through-hole 51 formed in a rear wall 49 of the housing 17, and a sandwiching flange portion 55 continued from the tubular portion 53 and facing an rear wall inner surface 59 of the housing 17; a crimping ring 29 for fixing a sheath 35 of the optical fiber cable 13 sheathed on an outer circumference of the tubular portion 53; and a boot 23 including a protective portion for covering outer circumferences of the optical fiber cable 13 and the crimping ring 29, and a locking flange portion 65 continued from the protective portion and sandwiched between the sandwiching flange portion 55 and the rear wall inner surface 59.

Among these, the optical fiber cable 13, the ferrule 19, the crimping sleeve 21, the crimping ring 29 and the boot 23 constitute a ferrule assembly 31.

The housing 17 made of a synthetic resin has, on a front side thereof, coupling opening portions 33 intended to be coupled with the corresponding optical connector, not shown. A pair of ferrules 19 are received inside the coupling opening portions 33.

The optical fiber 15 exposed by removing the sheath 35 and a tension-resistance body, not shown, from the optical fiber cable 13 is inserted and fixed in each of the ferrules 19. These ferrules 19 are movably received in the housing 17 in an axial direction thereof, and are elastically urged forward by a leaf spring 37 received in the housing 17. The leaf spring 37 is prevented from being separated from the housing 17 by a stopper 39.

As shown in Fig. 2, the ferrules 19 elastically urged forward by the leaf spring 37 are adapted such that annular portions 45 thereof are abutted to stopper walls 43 formed to protrude inside ferrule receiving holes 41, and thus are prevented from protruding further forward. The ferrules 19 are abutted and connected to ferrules of the corresponding optical connector by joint end surfaces 47 thereof. Thus, the optical fibers 15 terminated to allow connector-connection by the ferrules 19 are connected to optical lines of the corresponding optical connector.

Upon abutting against the corresponding optical connector, the ferrules 19 can be slightly pushed backward in a connection direction within a range of elastic deformation of the leaf spring 37, and therefore, damage due to an extreme stress concentration or the like is prevented. In addition, the urging force of the leaf spring 37 is acted as an abutting force between ferrules, and a desired connection loss can be stably achieved.

The sleeve through-hole 51 is formed in the rear wall 49 of the housing 17. The optical fibers 15 connected to the ferrules 19 are led out through the sleeve through-hole 51. The crimping sleeve 21 is interposed between the optical fibers 15 and the sleeve through-hole 51.

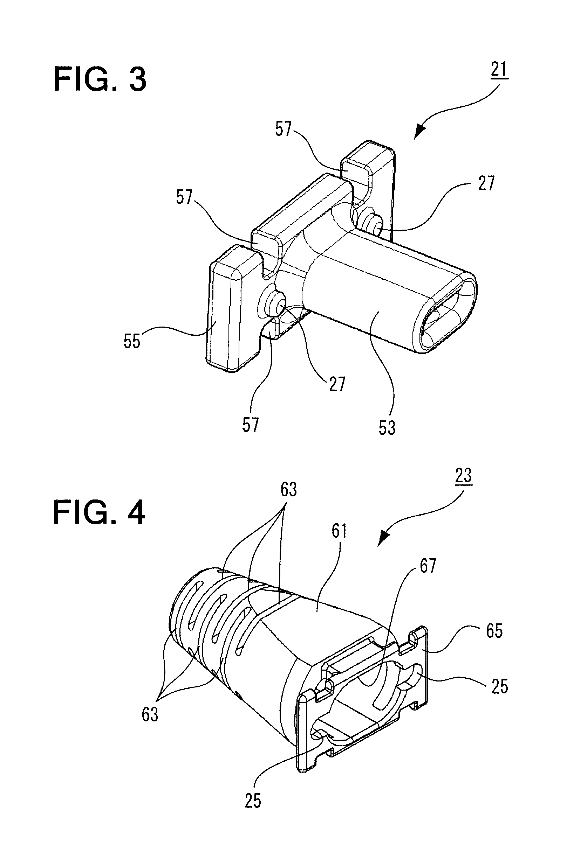

As shown in Fig. 3, the crimping sleeve 21 is made of a hard resin material, and has the flat tubular portion 53 through which the optical fibers 15 are inserted. On a front side of the tubular portion 53, the sandwiching flange portion 55 of a rectangular shape is provided to be connected in line thereto (to be continued therefrom).

On upper and lower edges of the sandwiching flange portion 55, a plurality of recesses 57 intended to be engaged with ribs, not shown, inside the housing 17 are formed. The crimping sleeve 21 is assembled in the housing 17 so that the tubular portion 53 is inserted through the through-hole 51 of the rear wall 49 and the sandwiching flange portion 55 faces the rear wall inner surface 59. The optical fibers 15 are inserted through the tubular portion 53 of the crimping sleeve 21 assembled in that way.

The optical fiber cable 13 is adapted such that the optical fibers 15 are led out from the tubular portion 53 of the crimping sleeve 21, while the sheath 35 thereof is sheathed on the outer circumference of the tubular portion 53. The sheath 35 sheathed on the tubular portion 53 is fixed on the tubular portion 53 by crimping the crimping ring 29 from the outside thereof. Thus, the optical fiber cable 13 and the crimping sleeve 21 are integrally fixed to each other. When the optical fiber cable 13 is pulled backward, the sandwiching flange portion 55 is abutted to the rear wall 49, thereby restricting separation of the crimping sleeve 21.

As shown in Fig. 4, the boot 23 is made of a soft material, such as a synthetic rubber, and has the protective portion 61 for covering outer circumferences of the optical fiber cable 13 and the crimping ring 29. A plurality of peripheral grooves 63 for imparting a suitable flexibility to the protective portion 61 are formed around the protective portion 61. The boot 23 has the locking flange portion 65 of a rectangular shape extending through the sleeve through-hole 51 of the housing 17 and continued from the protective portion 61. The boot 23 is assembled in the housing 17 by sandwiching the locking flange portion 65 between the sandwiching flange portion 55 of the crimping sleeve 21 and the rear wall inner surface 59 of the housing 17 as shown in Fig. 2.

A ring receiving hole 67 for receiving the crimping ring 29 is concentrically formed in the boot 23. The ring receiving hole 67 is opened at the center of the locking flange portion 65. On an inner side of the locking flange portion 65, a pair of protrusion locking holes 25 are formed with the ring receiving hole 67 interposed therebetween. Therefore, the pair of protrusion locking holes 25 are respectively arranged on left and right sides with the tubular portion 53 of the crimping sleeve 21 interposed therebetween. According to the present embodiment, the protrusion locking holes 25 are formed in a C shape, and are opened toward the ring receiving hole 67 by sharing the periphery thereof with the ring receiving hole 67.

Meanwhile, on the sandwiching flange portion 55 of the crimping sleeve 21, as shown in Fig. 3, a pair of boot locking protrusions 27 is formed to protrude between the sandwiching flange portion 55 interposed therebetween. The pair of boot locking protrusions 27 having a cylindrical shape are respectively fitted in the protrusion locking holes 25 of the locking flange portion 65 sandwiched between the sandwiching flange portion 55 and the rear wall inner surface 59.

According to the optical connector 11 of the present embodiment, the protrusion locking holes 25 and the boot locking protrusions 27 are provided in a pair with the tubular portion 53 interposed therebetween, and therefore, the locking flange portion 65 is locked to the boot locking protrusions 27 on both side in a diameter direction thereof with the center of the optical fiber cable 13 interposed therebetween, and thus is stably locked without being deformed by a strain.

Also, the optical connector 11 is configured such that a protrusion length of the boot locking protrusions 27 is set to be smaller than a thickness of the locking flange portion 65. Thus, when the optical fiber cable 13 is pulled, the sandwiching flange portion 55 of the crimping sleeve 21 can press the locking flange portion 65 before the boot locking protrusions 27 are abutted to the rear wall inner surface 59, and as result, pulling out of the locking flange portion 65 can be prevented by both sandwiching and locking actions.

Next, operations of the optical connector 11 having the above configurations will be described.

Upon assembling the optical connector 11, the optical fiber cable 13 is inserted through the boot 23, the crimping ring 29 and the crimping sleeve 21 in this order. Then, in the inside of the tubular portion 55 of the crimping sleeve 21, the optical fibers 15 exposed by removing the sheath 35 are inserted therethrough, whereas on the outer circumference of the tubular portion 55, the sheath 35 of the optical fiber cable 13 is fixed by the crimping ring 29.

The crimping sleeve 21 fixed on the optical fiber cable 13 is restricted from being separated by making the sandwiching flange portion 55 face the rear wall inner surface 59 inside the housing 17. The boot 23, of which the protective portion 61 is covering a portion of the optical fiber cable 13 and the crimping ring 23, is adapted such that the locking flange portion 65 continued from the protective portion 61 and extending through the sleeve through-hole 51 is sandwiched between the sandwiching flange portion 55 of the crimping sleeve 21 and the rear wall inner surface 59 of the hosing 17.

In addition, the boot locking protrusions 27 formed to protrude on the sandwiching flange portion 55 are inserted in the protrusion locking holes 25 formed in the locking flange portion 65.

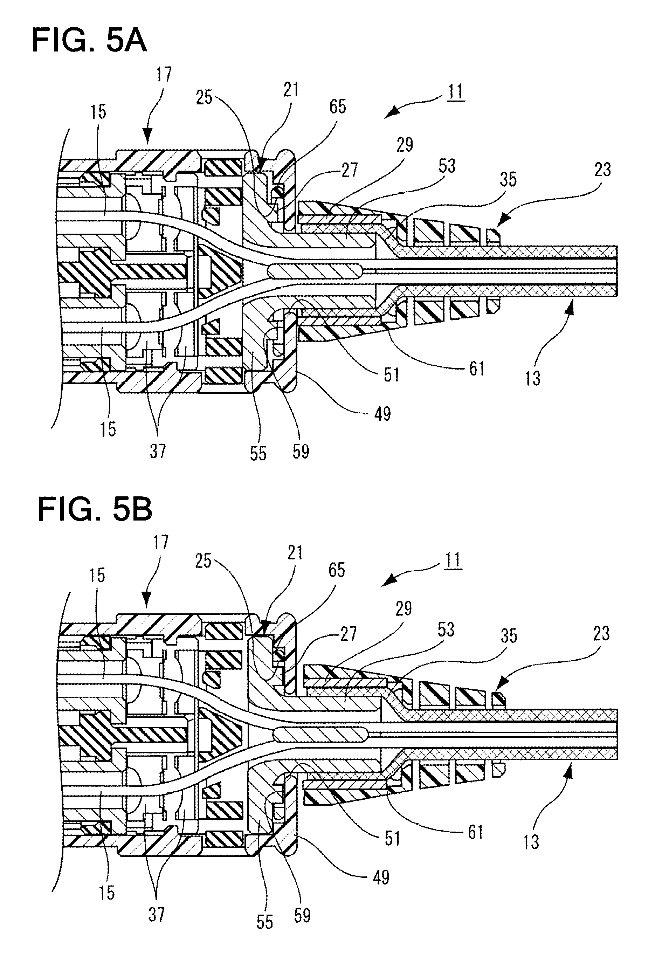

The optical connector 11 assembled in this way is adapted such that, as shown in Fig. 5A, the locking flange portion 65 sandwiched between the sandwiching flange portion 55 and the rear wall inner surface 59 is pulled toward the sleeve through-hole 51 when the boot 23 is pulled as a unity body. When the locking flange portion 65 is pulled toward the sleeve through-hole 51, the protrusion locking holes 25 radially moving inward are locked to the boot locking protrusions 27, thereby preventing the locking flange portion 65 form being pulled out from the sleeve through-hole 51.

Also, as shown in Fig. 5B, if the optical fiber cable 1 is pulled backward (the right side in the figure) due to bending of the optical fiber cable or the like, the sandwiching flange portion 55 of the crimping sleeve 21 fixed by the crimping ring 29 is pressed against the rear wall inner surface inner surface 59 as shown in Fig. 5B. The sandwiching flange portion 55 pressed against the rear wall inner surface 59 further surely prevents the locking flange portion 65 from being pulled out, because the sandwiching flange portion 55 and the rear wall inner surface 59 sandwich the locking flange portion 65 of the boot 23 therebetween and also the boot locking protrusions 27 come into pressure contact with the rear wall inner surface 59.

Therefore, according to the optical connector 11 of the present embodiment as described above, separation of the boot due to inadvertent pulling of the boot or loosening of the optical fiber cable bending can be prevented without increasing operation man-hours or material costs.

Meanwhile, it will be appreciated that components, such as the optical cable, the optical fiber, the ferrules, the housing, the crimping sleeve, the crimping ring, the boot, the boot locking protrusions and the protrusion locking holes, according to the optical connector of the present invention are not limited to the configurations of the foregoing embodiment, but can employ various configurations on the basis of the spirit of the present invention.

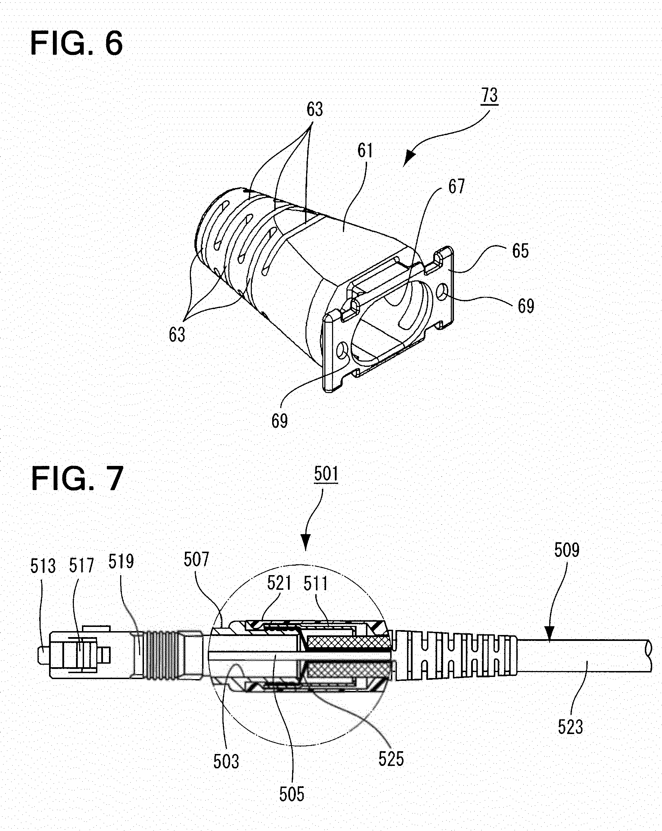

Although the boot 23 according to the foregoing embodiment has been illustrated as a configuration example in which the protrusion locking holes 25 formed in the inner side of the locking flange portion 65 are opened in a C shape, the optical connector according to the present invention is not limited to such a configuration. For example, as in a boot 73 shown in Fig. 6, the protrusion locking holes may be constituted as protrusion locking holes 69, whose peripheries are closed, and an opening shape thereof is not also limited to a circular shape, but may employ various shapes, such as a elliptic shape or a polygonal shape.

In addition, the boot locking protrusions of the sandwiching flange portion intended to be inserted into the protrusion locking holes of the locking flange portion are not also limited to a circular cylindrical shape, but may employ various shape, such as an elliptic cylindrical shape or a polygonal prism shape.

Meanwhile, the present invention is not limited to the foregoing embodiment, but appropriate changes, modifications or the like thereof can be made. In addition, material, shape, dimension, number, installation position and the like of each of the components of the foregoing embodiment are not limited but arbitrary as long as the present invention can be achieved.

Also, this application is based on Japanese Patent Application Serial No. 2011-086529 filed on April 8, 2011, the entire contents of which are incorporated herein by reference.

### Industrial Applicability

According to the optical connector of the present invention, separation of the boot due to inadvertent pulling of the boot or loosening of the optical fiber cable bending can be prevented without increasing operation man-hours or material costs.

### Reference Numerals List

- 11: Optical connector
- 13: Optical fiber cable
- 15: Optical fiber
- 17: Housing
- 19: Ferrule
- 21: Crimping sleeve
- 23: Boot
- 25: Protrusion locking hole
- 27: Boot locking protrusion
- 29: Crimping ring
- 35: Sheath
- 49: Rear wall
- 51: Sleeve through-hole
- 53: Tubular portion
- 55: Sandwiching flange portion
- 59: Rear wall inner surface
- 61: Protective portion
- 65: Engaging flange portion

## Claims

1. An optical connector, comprising:
a housing for receiving a ferrule connected to a distal end of an optical fiber of an optical fiber cable;
a crimping sleeve including a tubular portion adapted to allow the optical fiber to be inserted therethrough and also adapted to be inserted through a sleeve through-hole formed in a rear wall of the housing, and a sandwiching flange portion continued from the tubular portion and facing an rear wall inner surface of the housing;
a crimping ring for fixing a sheath of the optical fiber cable sheathed on an outer circumference of the tubular portion; and
a boot including a protective portion for covering outer circumferences of the optical fiber cable and the crimping ring, and a locking flange portion continued from the protective portion and sandwiched between the sandwiching flange portion and the rear wall inner surface,
wherein a boot locking protrusion formed on the sandwiching flange portion is inserted in a protrusion locking hole formed in an inner side of the locking flange portion.

2. The optical connector according to claim 1, wherein a pair of protrusion locking holes and a pair of boot locking protrusions are provided with the tubular portion interposed therebetween.

3. The optical connector according to claim 1 or 2, wherein a protrusion length of the boot locking protrusion is smaller than a thickness of the locking flange portion.
